# EUROPEAN PATENT APPLICATION

(11) **EP 4 224 620 A1**
(43) Date of publication of application: **09.08.2023**
(21) Application number: 21958773.0
(22) Date of filing: 29.09.2021
(51) Int. Cl.: H01M 50/552, H01M 50/528

(54) **TOP COVER COMPONENT OF BATTERY, AND BATTERY AND ELECTRIC DEVICE**

(71) Applicant: Contemporary Amperex Technology Co., Limited, Fujian PRC 352100 (CN)
(72) Inventor: CHEN, Congsheng, Ningde, Fujian 352100 (CN); LIN, Wenfa, Ningde, Fujian 352100 (CN); WEN, Yaoling, Ningde, Fujian 352100 (CN)
(74) Representative: Frick, Robert
(86) International application number: PCT/CN2021/121796
(87) International publication number: WO 2023/050183

(57) **Abstract**

Embodiments of this application provide a top cover assembly (101) of a battery, a battery, and an electric apparatus, which can optimize the processing technology of batteries so as to improve the performance of batteries. The top cover assembly (101) of the battery includes a top cover plate (130); poles (200) disposed on the top cover plate (130), each of which includes a first welding zone (201); and adapting pieces (300) configured to be electrically connected to the poles (200), where the adapting piece (300) includes a second welding zone (301), and the second welding zone (301) is configured to be correspondingly welded to the first welding zone (201) to implement electrical connection; where both the first welding zone (201) and the second welding zone (301) are disposed obliquely with respect to a plane in which the top cover plate (130) is located. The technical solutions in the embodiments of this application can improve welding reliability of the first welding zone and the second welding zone, thereby guaranteeing the electrical connection between poles and adapting pieces and hence the performance of batteries.

## Description

### TECHNICAL FIELD

Embodiments of this application relate to the battery field, and more specifically, to a top cover assembly of a battery, a battery, and an electric apparatus.

### BACKGROUND

Energy conservation and emission reduction are crucial to sustainable development of the automobile industry. In this context, electric vehicles, with their advantages in energy conservation and emission reduction, have become an important part of sustainable development of the automobile industry. For electric vehicles, battery technology is an important factor in connection with their development.

In the development of battery technology, the processing technology of each component of batteries may affect the final performance of batteries. Therefore, how the processing technology of batteries is optimized to guarantee the performance of batteries is an urgent technical problem that needs to be solved in battery technology.

### SUMMARY

This application provides a top cover assembly of a battery, a battery, and an electric apparatus to optimize the processing technology of batteries, so as to guarantee the performance of batteries.

According to a first aspect, a top cover assembly of a battery is provided, including: a top cover plate; poles disposed on the top cover plate, each of which includes a first welding zone; and adapting pieces configured to be electrically connected to the poles, where the adapting piece includes a second welding zone, and the second welding zone is configured to be correspondingly welded to the first welding zone to implement electrical connection; where both the first welding zone and the second welding zone are disposed obliquely with respect to a plane in which the top cover plate is located.

According to the technical solution in this embodiment of this application, both the first welding zone of the pole and the second welding zone of the adapting piece are disposed obliquely with respect to the plane in which the top cover plate is located. During fitting and welding of the pole and the adapting piece, the obliquely disposed first welding zone and second welding zone increase compressive stress so that the first welding zone and the second welding zone can be properly press-fitted with a small external force, thereby avoiding poor welding caused by gaps between the first welding zone and the second welding zone. Therefore, the technical solution in this embodiment of this application can improve welding reliability of the first welding zone and the second welding zone, thereby guaranteeing the electrical connection between poles and adapting pieces and hence the performance of batteries. In addition, a molten pool at the obliquely disposed first welding zone and second welding zone can flow under the action of gravity to fill in places with defects such as poor welding that occur in welding, thereby improving the welding performance of the adapting piece and the pole. In addition, in a case that a laser welding process is used to weld the first welding zone and the second welding zone, a laser emitting apparatus generally emits laser light to the adapting piece in the vertical direction, and if the adapting piece is disposed horizontally, laser light experiences strong reflection on the surface of the adapting piece, and the light reflected returns to the laser emitting apparatus along the original path. If the energy of the light reflected is high, this affects normal operation of the laser emitting apparatus, or even causes a shutdown of the laser emitting apparatus, affecting the processing efficiency of batteries. According to the technical solution in this embodiment of this application, both the first welding zone and the second welding zone are disposed obliquely with respect to the plane in which the top cover plate is located, so that after a laser emitting apparatus emits laser light to the adapting piece in the vertical direction to weld the first welding zone and the second welding zone, the light reflected does not return to the laser emitting apparatus, thereby avoiding the impact of the light reflected on the laser emitting apparatus, and improving the processing efficiency of batteries.

In some possible embodiments, the pole is of an axisymmetric structure, and the first welding zone and the second welding zone are disposed symmetrically with respect to an axis of the pole.

According to the technical solution in this embodiment, the pole of an axisymmetric structure is easy to process and install. The first welding zone and the second welding zone are disposed symmetrically with respect to the axis of the pole so that during welding of the pole and the adapting piece, the symmetrically disposed welding zones can offset transverse pressure on both sides of the axis when a clamp is used to press-fit the first welding zone and the second welding zone, thereby improving the relative stability between the first welding zone and the second welding zone so as to further improve the welding performance thereof.

In some possible embodiments, the pole includes a first protruding portion that protrudes toward the inside of the battery, and the first welding zone is located in at least part of the first protruding portion; and the adapting piece includes a second recessed portion that mates with the first protruding portion, and the second welding zone is located in a zone of the second recessed portion that corresponds to the first welding zone.

According to the technical solution in this embodiment, the first protruding portion of the pole is used to form the first welding zone oblique with respect to the top cover plate, and the second recessed portion of the adapting piece is used to form the second welding zone oblique with respect to the top cover plate, to make the first welding zone and the second welding zone face each other so as to implement welding connection. In addition, all portions of the pole have a small thickness except for the first protruding portion of the pole, which helps reduce the overall manufacturing costs of the pole.

In some possible embodiments, the pole includes a first recessed portion that is recessed toward the outside of the battery, and the first welding zone is located in at least part of the first recessed portion; and the adapting piece includes a second protruding portion that mates with the first recessed portion, and the second welding zone is located in a zone of the second protruding portion that corresponds to the first welding zone.

According to the technical solution in this embodiment, the first recessed portion of the pole is used to form the first welding zone oblique with respect to the top cover plate, and the second protruding portion of the adapting piece is used to form the second welding zone oblique with respect to the top cover plate, to make the first welding zone and the second welding zone face each other so as to implement welding connection. In addition, the first recessed portion of the pole is recessed toward the outside of the battery so that the space inside the battery is not affected, thereby helping to improve the energy density of batteries.

In some possible embodiments, the second recessed portion or the second protruding portion is a hollow frustum structure having a top surface and a side surface or a hollow taper structure having a side surface, where the hollow frustum structure or the hollow taper structure is symmetrical with respect to the axis of the pole, and the second welding zone is located in at least part of the side surface of the hollow frustum structure or the hollow taper structure.

According to the technical solution in this embodiment, the second recessed portion or the second protruding portion of the adapting piece is a hollow frustum structure or hollow taper structure that is easy to process and fit with the pole. In addition, if the second recessed portion or the second protruding portion of the adapting piece is a hollow truncated cone structure or a hollow cone structure, the side surface thereof is a smooth arc surface so that the second welding zone on the side surface of the second recessed portion or the second protruding portion is a smooth welding zone without bulges, which can improve the welding performance of the pole and the adapting piece.

In some possible embodiments, an axial section of the hollow frustum structure or the hollow taper structure has a base angle of less than 20°.

According to the technical solution in this embodiment, the base angle α of the axial section of the hollow frustum structure or the hollow taper structure is controlled to be less than 20° so that the side surface of the hollow frustum structure or the hollow taper structure has a small slope, which can improve the welding performance of the second welding zone on the side surface and the first welding zone, thereby ensuring good electrical connection between the pole and the adapting piece.

In some possible embodiments, the adapting piece further includes a stress relief portion, and the stress relief portion is configured to relieve welding stress applied to the second welding zone.

According to the technical solution in this embodiment, the adapting piece includes the stress relief portion, and the stress relief portion can relieve welding stress generated after the second welding zone of the adapting piece expands under heat and contracts in cooling, so as to avoid cracks in the adapting piece and guarantee the performance of the adapting piece and the battery using the adapting piece.

In some possible embodiments, the stress relief portion is symmetrical with respect to the axis of the pole, and the second welding zone is disposed around the stress relief portion.

According to the technical solution in this embodiment, like the second welding zone, the stress relief portion may be symmetrical with respect to the axis of the pole so that the stress relief portion corresponds to the second welding zone to symmetrically relieve the welding stress in the second welding zone, which makes the second welding zone welded still a symmetrical structure, thereby improving the installation stability of the adapting piece in the battery. In addition, the second welding zone is disposed around the stress relief portion to allow the stress relief portion to relieve the welding stress in all directions of the second welding zone to the maximum extent, so as to avoid cracks in the adapting piece.

In some possible embodiments, the stress relief portion is disposed at center of the second recessed portion or the second protruding portion.

In some possible embodiments, the stress relief portion is a hole.

According to the technical solution in this embodiment, the stress relief portion is a hole and therefore is easy to process with low manufacturing costs, and the hole can adaptively adjust its size with the expansion and contraction of the second welding zone during welding so as to relieve the welding stress in the second welding zone.

In some possible embodiments, a ratio of area of the hole to area of the second welding zone is not greater than 4%.

According to the technical solution in this embodiment, the ratio of area of the hole to area of the second welding zone being not greater than 4% guarantees the area and welding effect of the second welding zone.

In some possible embodiments, the pole further includes a position limiting portion configured to cooperate with the stress relief portion so as to limit position of the adapting piece.

According to the technical solution in this embodiment, the pole is provided with the position limiting portion so that when the adapting piece is fitted to the pole, the position limiting portion can limit the position of the adapting piece to avoid relative movement of the adapting piece on the pole, ensuring that the adapting piece can be securely fitted on the pole. In addition, the stress relief portion of the adapting piece is also used to cooperate with the position limiting portion of the pole. To be specific, the stress relief portion is configured to not only relieve the welding stress in the second welding zone of the adapting piece, but also cooperate with the position limiting portion of the pole to limit the position of the adapting piece. This simplifies the structural design of the adapting piece and reduces the manufacturing costs of the adapting piece.

In some possible embodiments, the stress relief portion is a hole, and the position limiting portion is a protruding structure that mates with the hole.

In some possible embodiments, the position limiting portion is disposed at center of the first recessed portion or the first protruding portion.

According to the technical solution in this embodiment, the position limiting portion is disposed at the center of the first protruding portion or the first recessed portion and can cooperate with the stress relief portion disposed at the center of the second recessed portion or the second protruding portion to limit the position of the central part of the adapting piece, so as to ensure the position limiting effect and installation stability of the adapting piece.

In some possible embodiments, the adapting piece further includes a boss structure symmetrical relative to the axis of the pole and protruding toward the outside of the battery, where the boss structure is a semi-closed hollow structure, and the second welding zone is located on the boss structure.

In some possible embodiments, the boss structure has an adhesive layer inside.

According to the technical solution in this embodiment, the boss structure that protrudes toward the outside of the battery is formed at the adapting piece. From a relative perspective, the boss structure may also be regarded as a recessed portion that is recessed toward the inside of the battery. The adhesive layer may be accommodated in the recessed portion to fix spatterings generated in welding the first welding zone of the pole and the second welding zone of the boss structure to prevent the spatterings from affecting other components of the battery, so as to guarantee the electrical performance and safety performance of the battery.

In some possible embodiments, the boss structure includes a second recessed portion recessed toward the inside of the boss structure, and the second welding zone is located in the second recessed portion; and height of the second recessed portion is not greater than height of the boss structure in a direction of the axis the pole.

If the pole is not provided with the first protruding portion, the boss structure is not provided with the second recessed portion, and both the first welding zone of the pole and the second welding zone of the boss structure are flat, this boss structure has a large hollow space. To fully ensure that the spatterings attached to the boss structure are fixed by the adhesive layer, the adhesive layer accommodated in the boss structure needs to be large enough to fill up the boss structure. According to the technical solution in this embodiment, the second recessed portion that is recessed toward the inside of the boss structure is provided in the boss structure, so that the hollow space of the boss structure becomes smaller and therefore needs to accommodate a smaller adhesive layer, thereby reducing the overall manufacturing costs of the battery while fully ensuring that the spatterings in the boss structure are fixed by the adhesive layer.

According to a second aspect, a battery is provided, including a battery cell and the top cover assembly according to any one of the first aspect or the possible embodiments of the first aspect, where the battery cell includes tabs, and the tabs are electrically connected to the poles through the adapting pieces.

According to a third aspect, an electric apparatus is provided, including the battery according to the second aspect, where the battery is configured to supply electric energy.

According to a fourth aspect, a battery preparation method is provided, including: providing a battery cell, where the battery cell includes tabs; providing a top cover assembly, where the top cover assembly includes: a top cover plate; poles disposed on the top cover plate, each of which includes a first welding zone; and adapting pieces, each of which includes a second welding zone and a third welding zone, where the second welding zone corresponds to the first welding zone, both the first welding zone and the second welding zone are disposed obliquely with respect to a plane in which the top cover plate is located, and the third welding zone corresponds to the tab; and welding the second welding zone and the first welding zone together and welding the tab to the third welding zone, so as to electrically connect the pole and the tab.

According to a fifth aspect, a battery preparation apparatus is provided, including: a first providing module, configured to provide a battery cell, where the battery cell includes tabs; a second providing module, configured to provide a top cover assembly, where the top cover assembly includes: a top cover plate; poles disposed on the top cover plate, each of which includes a first welding zone; and adapting pieces, each of which includes a second welding zone and a third welding zone, where the second welding zone corresponds to the first welding zone, both the first welding zone and the second welding zone are disposed obliquely with respect to a plane in which the top cover plate is located, and the third welding zone corresponds to the tab; and a welding module, configured to weld the second welding zone and the first welding zone together and weld the tab to the third welding zone, so as to electrically connect the pole and the tab.

According to the technical solution in this embodiment of this application, both the first welding zone of the pole and the second welding zone of the adapting piece are disposed obliquely with respect to the plane in which the top cover plate is located. During fitting and welding of the pole and the adapting piece, the obliquely disposed first welding zone and second welding zone increase compressive stress so that the first welding zone and the second welding zone can be properly press-fitted with a small external force, thereby avoiding poor welding caused by gaps between the first welding zone and the second welding zone. Therefore, the technical solution in this embodiment of this application can improve welding reliability of the first welding zone and the second welding zone, thereby guaranteeing the electrical connection between poles and adapting pieces and hence the performance of batteries. In addition, a molten pool at the obliquely disposed first welding zone and second welding zone can flow under the action of gravity to fill in places with defects such as poor welding that occur in welding, thereby improving the welding performance of the adapting piece and the pole. In addition, in a case that a laser welding process is used to weld the first welding zone and the second welding zone, a laser emitting apparatus generally emits laser light to the adapting piece in the vertical direction, and if the adapting piece is disposed horizontally, laser light experiences strong reflection on the surface of the adapting piece, and the light reflected returns to the laser emitting apparatus along the original path. If the energy of the light reflected is high, this affects normal operation of the laser emitting apparatus, or even causes a shutdown of the laser emitting apparatus, affecting the processing efficiency of batteries. According to the technical solution in this embodiment of this application, both the first welding zone and the second welding zone are disposed obliquely with respect to the plane in which the top cover plate is located, so that after a laser emitting apparatus emits laser light to the adapting piece in the vertical direction to weld the first welding zone and the second welding zone, the light reflected does not return to the laser emitting apparatus, thereby avoiding the impact of the light reflected on the laser emitting apparatus, and improving the processing efficiency of batteries.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a vehicle disclosed in an embodiment of this application;
FIG. 2 is a schematic structural diagram of a battery disclosed in an embodiment of this application;
FIG. 3 is a schematic structural diagram of a battery cell disclosed in an embodiment of this application;
FIG. 4 is a schematic structural diagram of a top cover assembly disclosed in an embodiment of this application;
FIG. 5 is a schematic structural diagram of a top cover assembly disclosed in an embodiment of this application;
FIG. 6 is a schematic structural diagram of a top cover assembly disclosed in an embodiment of this application;
FIG. 7 is a schematic structural diagram of a top cover assembly disclosed in an embodiment of this application;
FIG. 8 is a schematic structural diagram of a top cover assembly disclosed in an embodiment of this application;
FIG. 9 is a schematic structural diagram of two three-dimensional structures of an adapting piece disclosed in an embodiment of this application;
FIG. 10 is a schematic structural diagram of two adapting pieces disclosed in an embodiment of this application;
FIG. 11 is a schematic structural diagram of a top cover assembly disclosed in an embodiment of this application;
FIG. 12 is a schematic structural diagram of a top cover assembly disclosed in an embodiment of this application;
FIG. 13 is a schematic flowchart of a battery preparation method disclosed in an embodiment of this application; and
FIG. 14 is a schematic block diagram of a battery preparation apparatus disclosed in an embodiment of this application.

The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", and "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations as shown in the drawings, and do not limit the specific structure of this application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. A person of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

The battery in this application is a single physical module that includes one or more battery cells for providing electric power. For example, the battery mentioned in this application may include a battery module, a battery pack, or the like. A battery typically includes a box configured to enclose one or more battery cells. The box can prevent liquids or other foreign matter from affecting charging or discharging of the battery cell.

Optionally, the battery cell may include a lithium ion secondary battery, a lithium ion primary battery, a lithium-sulfur battery, a sodium/lithium-ion battery, a sodium ion battery, a magnesium ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery cell is not limited in the embodiments of this application either.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of current collector uncoated with the positive electrode active substance layer protrudes out of the part of current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of current collector uncoated with the negative electrode active substance layer protrudes out of the part of current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (Polypropylene, PP), polyethylene (Polyethylene, PE), or the like. In addition, the electrode assembly may be a winding structure or a laminated structure, but the embodiments of this application are not limited thereto.

Further, the battery cell may include a housing and a top cover plate. The foregoing electrode assembly and the electrolyte can be accommodated in an accommodating space formed by the housing and the top cover plate, and the housing and the top cover plate can be configured to package the electrode assembly and electrolyte so as to protect them. The top cover plate is provided with electrode terminals that are electrically connected to the electrode assembly, and the electric energy of the battery cell can be transmitted through the electrode terminals. Specifically, the electrode terminals may include a positive electrode terminal and a negative electrode terminal, and the positive electrode terminal and the negative electrode terminal may be respectively electrically connected to the positive tab and the negative tab of the electrode assembly through a connection member. In this application, the electrode terminal is also referred to as a pole, and the connection member for connecting the electrode terminal and the tab is also referred to as an adapting piece.

For the development of battery technology, many design factors need to be considered, and the process technology of each component of a battery affects the final performance of the battery. It can be learned from the above related descriptions that the structure design and corresponding process technology of poles and adapting pieces will especially affect the performance of batteries because poles and adapting pieces are important components for transmitting the electric energy of battery cells. Specifically, if no good electrical connection is formed between the poles and the adapting pieces, the electric energy of batteries may not be well transmitted, which seriously affects the normal use of batteries, or even causes battery safety problems.

In some related technologies, welding process is used to implement electrical connection between poles and adapting pieces. During welding, a welding surface of the pole is arranged parallel to the horizontal plane, and the adapting piece is disposed on a welding surface of the pole. A clamp applies a vertical force to the adapting piece to press-fit the adapting piece onto the welding surface of the pole, and then the adapting piece is welded to the pole by using a welding tool. In this technology, the adapting piece of a sheet structure easily deforms during processing, and therefore it is very likely that gaps are present between the pole and the adapting piece. The pole and the adapting piece come into contact on the horizontal plane. During the press-fit, if the pole and the adapting piece are press-fitted on the horizontal plane with a small press force, the gaps between the pole and the adapting piece may not be eliminated, resulting in poor welding during the welding and hence affecting the electrical connection performance of the pole and the adapting piece.

In view of this, this application proposes a top cover assembly of a battery that includes poles, adapting pieces, and a top cover plate. A first welding zone of the pole and a second welding zone of the adapting piece are welded to each other to implement electrical connection between the pole and the adapting piece. Both the first welding zone of the pole and the second welding zone of the adapting piece are disposed obliquely with respect to a plane in which the top cover plate is located. During the welding of the pole and the adapting piece, the top cover plate may be disposed parallel to the horizontal plane, and both the first welding zone of the pole and the second welding zone of the adapting piece are disposed obliquely with respect to the horizontal plane. When a clamp applies a vertical force to the adapting piece, the inclined planes increase the compressive stress so that the first welding zone and the second welding zone can be press-fitted to contact with a small force. This avoids gaps between the first welding zone and the second welding zone and hence improves the welding reliability of the first welding zone and the second welding zone, thereby guaranteeing the electrical connection between the pole and the adapting piece to ensure the performance of the battery. In addition, during welding of the obliquely disposed first welding zone and second welding zone, a liquid molten pool at the first welding zone and the second welding zone can flow under the action of gravity to fill in places with defects such as poor welding that occur in welding, thereby further improving the welding performance of the adapting piece and the pole.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are applicable to not only the apparatuses described above but also all apparatuses using batteries. However, for brevity of description, in the following embodiments, an electric vehicle is used as an example for description.

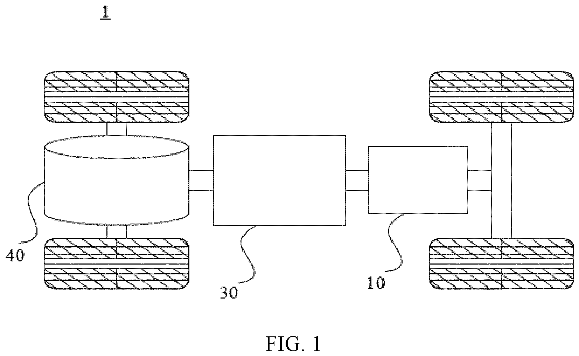

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be called a battery pack. Optionally, a plurality of battery cells may be connected in series, parallel, or series-parallel to form a battery module first, and then a plurality of battery modules are connected in series, parallel, or series-parallel to form a battery. In a word, the plurality of battery cells may be directly combined into a battery, or may be first combined into battery modules which are then combined into a battery.

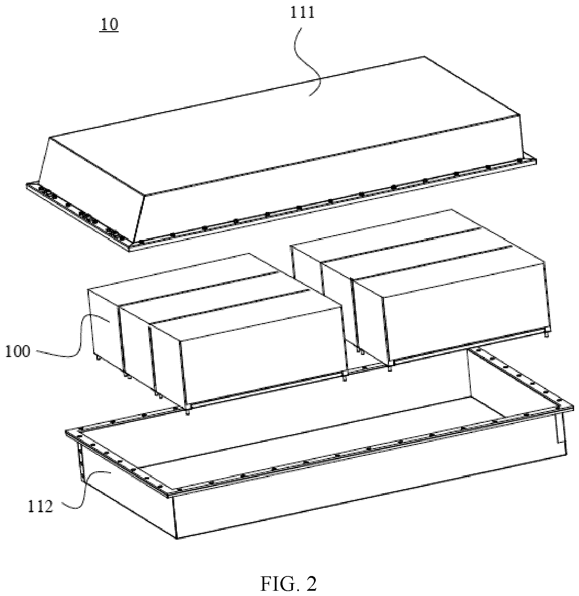

For example, FIG. 2 is a schematic structural diagram of a battery 10 according to an embodiment of this application. The battery 10 may include a plurality of battery cells 100. The battery 10 may further include a box (or referred to as a cover). The inside of the box is a hollow structure, and the plurality of battery cells 100 are accommodated in the box. As shown in FIG. 2, the box may include two portions, which are herein referred to as a first portion 111 and a second portion 112 respectively. The first portion 111 and the second portion 112 are snap-fitted together. Shapes of the first portion 111 and the second portion 112 may be determined based on a shape of the plurality of battery cells 100 combined, and the first portion 111 and the second portion 112 each may have an opening. For example, the first portion 111 and the second portion 112 each may be a hollow cuboid and have only one face with an opening, the opening of the first portion 111 is disposed opposite the opening of the second portion 112, and the first portion 111 and the second portion 112 are snap-fitted to form the box with an enclosed chamber. The plurality of battery cells 100 are connected in parallel, series, or series-parallel, and then put into the box formed after the first portion 111 and the second portion 112 are snap-fitted.

Optionally, the battery 10 may further include other structures. Details are not described herein. For example, the battery 10 may further include a busbar configured to implement electrical connection between the plurality of battery cells 100, such as parallel, series, or series-parallel connection. Specifically, the busbar may implement the electrical connection between the battery cells 100 by connecting electrode terminals of the battery cells 100. Further, the busbar may be fastened on poles of the battery cells 100 by welding. Electric energy of the plurality of battery cells 100 may be further led out through the box by a conductive mechanism. Optionally, the conductive mechanism may also belong to the busbar.

Based on different power needs, the battery cells 100 can be set in any quantity. The plurality of battery cells 100 may be connected in series, parallel, or series-parallel to implement a greater capacity or power. Because each battery 10 may include a large quantity of battery cells 100, for ease of installation, the battery cells 100 may be disposed by group, and each group of battery cells 100 form a battery module. The quantity of battery cells 100 included in the battery module is not limited, and can be set according to requirements.

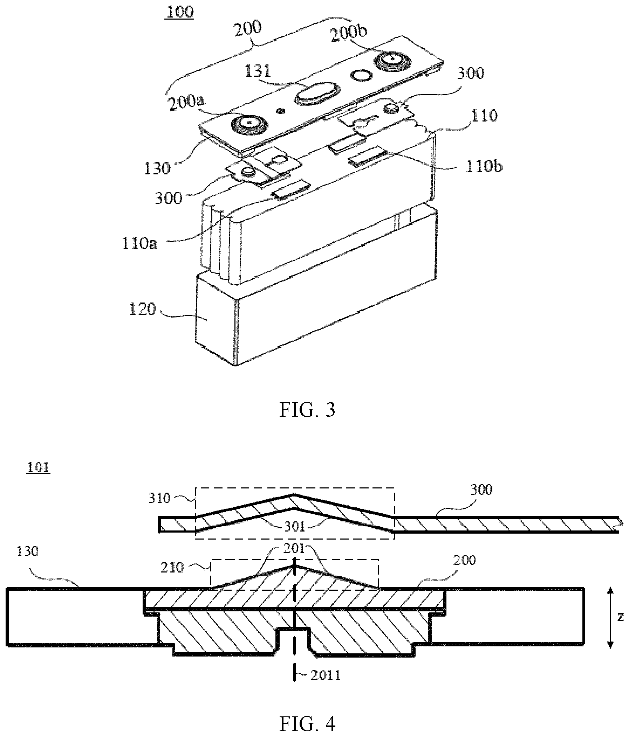

FIG. 3 is a schematic structural diagram of a battery cell 100 according to an embodiment of this application. The battery cell 100 includes one or more electrode assemblies 110, a housing 120, and a top cover plate 130. The top cover plate 130 and walls of the housing 120 all are referred to as walls of the battery cell 100. The housing 120 is determined depending on a shape of the one or more electrode assemblies 110 combined. For example, the housing 120 may be a hollow cuboid, cube, or cylinder, and one face of the housing 120 has an opening so that the one or more electrode assemblies 110 can be put into the housing 120. For example, when the housing 120 is a hollow cuboid or cube, a plane of the housing 120 is a face with an opening, that is, the plane does not have a wall so that the inside and the outside of the housing 120 can communicate without blocking. When the housing 120 can be a hollow cylinder, an end face of the housing 120 is a face with an opening, that is, the end face does not have a wall so that the inside and the outside of the housing 120 can communicate without blocking. The top cover plate 130 covers the opening and joins the housing 120 to form an enclosed cavity for accommodating the electrode assembly 110. The housing 120 is filled with an electrolyte, such as a liquid electrolyte.

The battery cell 100 may further include two poles 200, and the two poles 200 may be disposed on the top cover plate 130. The top cover plate 130 is generally planar, and two poles 200 are fastened on a planar surface of the top cover plate 130. The two poles 200 are a positive pole 200a and a negative pole 200b, respectively. Each pole 200 is provided with a corresponding connection member 300. The connection member 300 can also be referred to as an adapting piece 300 and is located between the top cover plate 130 and the electrode assembly 110 and configured to be electrically connected the electrode assembly 110 to the pole 200.

As shown in FIG. 3, each electrode assembly 110 has a first tab 110a and a second tab 110b. The first tab 110a and the second tab 110b have opposite polarities. For example, when the first tab 110a is a positive tab, the second tab 110b is a negative tab. The first tab 110a of the one or more electrode assemblies 110 is connected to one pole through one adapting piece 300, and the second tab 110b of the one or more electrode assemblies 110 is connected to another electrode terminal through another adapting piece 300. For example, the positive pole 200a is connected to the positive tab 110a through one adapting piece 300, and the negative pole 200b is connected to the negative tab 110b through another adapting piece 300.

In the battery cell 100, one or more electrode assemblies 110 may be provided depending on an actual need. As shown in FIG. 3, the battery cell 100 is provided with four independent electrode assemblies 110.

For example, one wall of the battery cell 100 may be provided with a pressure relief mechanism 131. For example, as shown in FIG. 3, in addition to the poles 200, the top cover plate 130 may be provided with the pressure relief mechanism 131. The pressure relief mechanism 131 is configured to be actuated when internal pressure or temperature of the battery cell 100 reaches a threshold, so as to release the internal pressure or temperature.

The pressure relief mechanism 131 may be part of the top cover plate 130, or a separate structure that is fastened on the top cover plate 130 through, for example, welding. When the pressure relief mechanism 131 is part of the top cover plate 130, for example, an indentation formed in the top cover plate 130, the thickness of the top cover plate 130 corresponding to the indentation is smaller than the thickness of any zone of the pressure relief mechanism 131 other than the indentation. The indentation is the weakest part of the pressure relief mechanism 131. When too much gas generated by the battery cell 100 causes internal pressure of the housing 211 to rise to a threshold, or when heat resulting from reactions inside the battery cell 100 causes internal temperature of the battery cell 100 to rise to a threshold, the pressure relief mechanism 131 can rupture at the indentation so that the inside and outside of the housing 211 communicate with each other without blocking, and the gas pressure and temperature are discharged through the rapture of the pressure relief mechanism 131, thereby preventing the battery cell 100 from exploding.

Optionally, the pressure relief mechanism 131 may be disposed on any wall of the battery cell 100 other than the top cover plate 130 shown in FIG. 3. For example, the pressure relief mechanism 131 may be disposed on a bottom wall of the housing 120 that is opposite the top cover plate 130.

Optionally, the pressure relief mechanism 131 may be various possible pressure relief structures, which is not limited in the embodiments of this application. For example, the pressure relief mechanism 131 may be a temperature-sensitive pressure relief mechanism configured to be able to melt when internal temperature of a battery cell 100 provided with the pressure relief mechanism 131 reaches a threshold; and/or the pressure relief mechanism 131 may be a pressure relief mechanism configured to be able to rupture when internal gas pressure of a battery cell 100 provided with the pressure relief mechanism 131 reaches a threshold.

FIG. 4 is a schematic structural diagram of a top cover assembly 101 of a battery according to an embodiment of this application.

As shown in FIG. 4, the top cover assembly 101 includes a top cover plate 130; poles 200 disposed on the top cover plate 130, where the pole 200 includes a first welding zone 201; and adapting pieces 300 configured to be electrically connected to the poles 200, where the adapting piece 300 includes a second welding zone 301, and the second welding zone 301 is configured to be correspondingly welded to the first welding zone 201 to implement electrical connection between the pole 200 and the adapting piece 300; where both the first welding zone 201 and the second welding zone 301 are disposed obliquely with respect to a plane in which the top cover plate 130 is located.

In this embodiment of this application, for a shape of the top cover plate 130, refer to FIG. 3. The overall shape can be approximately viewed as a plate structure. A plane in which the plate structure is located is a plane in which the top cover plate 130 in this embodiment of this application is located. The pole 200 is fixedly disposed on the plate structure. When the top cover plate 130 is provided with a boss or countersunk hole structure due to the need for some additional function components, such thickened or thinned zones do not affect the plane in which a main body of the top cover plate 130 is located.

Further, as shown in FIG. 4, a direction perpendicular to the plane in which the top cover plate 130 is located is marked as the z direction. In the z direction, the pole 200 includes two end faces: one faces toward the inside of the battery cell and may be electrically connected to the adapting piece 300, and the other one faces toward the outside of the battery cell and may be electrically connected to an external electrical component such as a busbar. In this embodiment of this application, the first welding zone 201 is located on an end face of the pole 200 that faces toward the adapting piece 200, and the first welding zone 201 may be part of the end face.

Corresponding to the first welding zone 201, the second welding zone 301 of the adapting piece 300 is located on a side of the adapting piece 300 that faces toward the pole 200. To implement reliable welding between the first welding zone 201 and the second welding zone 301, the two zones may be parallel or approximately parallel to each other.

During welding of the pole 200 and the adapting piece 300, the top cover plate 130 may be disposed on the horizontal plane, the adapting piece 300 is disposed over the pole 200, and the first welding zone 201 and the second welding zone 301 correspond to each other. A clamp applies a vertical press force to the adapting piece 300 to press-fit the second welding zone 301 tightly to the first welding zone 201, and then the second welding zone 301 and the first welding zone 201 are welded together by using a welding tool, so as to implement electrical connection between the adapting piece 300 and the pole 200.

Optionally, a welding process used between the second welding zone 301 and the first welding zone 201 includes, but is not limited to, laser welding, plasma arc welding, electric arc welding, and the like. Specifically, during welding, laser light, plasma arcs, electric arcs, or the like may be used as a heat source to act on a place in which the second welding zone 301 of the adapting piece 300 is located. The second welding zone 301 and the corresponding first welding zone 201 of the pole 200 melt under heat to form a molten pool. After the molten pool cools down, the welding between the first welding zone 201 and the second welding zone 301 is completed.

According to the technical solution in this embodiment of this application, both the first welding zone 201 of the pole 200 and the second welding zone 301 of the adapting piece 300 are disposed obliquely with respect to the plane in which the top cover plate 130 is located. During fitting and welding of the pole 200 and the adapting piece 300, the obliquely disposed first welding zone 201 and second welding zone 301 increase compressive stress so that the first welding zone 201 and the second welding zone 301 can be properly press-fitted with a small external force, thereby avoiding poor welding caused by gaps between the first welding zone 201 and the second welding zone 301. Therefore, the technical solution in this embodiment of this application can improve welding reliability of the first welding zone 201 and the second welding zone 202, thereby guaranteeing the electrical connection between poles 200 and adapting pieces 300 and hence the performance of batteries. In addition, the molten pool at the obliquely disposed first welding zone 201 and second welding zone 301 can flow under the action of gravity to fill in places with defects such as poor welding that occur in welding, thereby improving the welding performance of the adapting piece 300 and the pole 200.

In addition, in a case that a laser welding process is used to weld the first welding zone 201 and the second welding zone 301, a laser emitting apparatus generally emits laser light to the adapting piece 300 in the vertical direction, and if the adapting piece 300 is disposed horizontally, laser light experiences strong reflection on the surface of the adapting piece 300, and the light reflected returns to the laser emitting apparatus along the original path. If the energy of the light reflected is high, this affects normal operation of the laser emitting apparatus, or even causes a shutdown of the laser emitting apparatus, affecting the processing efficiency of batteries. According to the technical solution in this embodiment of this application, both the first welding zone 201 and the second welding zone 301 are disposed obliquely with respect to the plane in which the top cover plate 130 is located, so that after a laser emitting apparatus emits laser light to the adapting piece 300 in the vertical direction to weld the first welding zone 201 and the second welding zone 301, the light reflected does not return to the laser emitting apparatus, thereby avoiding the impact of the light reflected on the laser emitting apparatus, and improving the processing efficiency of batteries.

Optionally, the first welding zone 201 and the second welding zone 301 in this embodiment of this application may have an oblique flat surface or oblique curved surface. The embodiments of this application do not limit the first welding zone 201 and the second welding zone 301 to a specific form provided that these zones are oblique with respect to the plane in which the top cover plate 130 is located.

For example, in some embodiments, both the first welding zone 201 and the second welding zone 301 above may include an oblique surface in one direction; or, in some other embodiments, both the first welding zone 201 and the second welding zone 301 may include oblique surfaces in multiple directions; or, in some other embodiments, both the first welding zone 201 and the second welding zone 301 may include a curved surface of any type.

Optionally, as shown in FIG. 4, the pole 200 may be of an axisymmetric structure, and both the first welding zone 201 and its corresponding second welding zone 301 are symmetrically disposed with respect to an axis 2011 of the pole 200.

Specifically, the pole 200 of an axisymmetric structure can be easy to process and install, and the pole 200 is symmetrical with respect to its axis. In this embodiment of this application, the axis 2011 of the pole 200 runs through the geometric center of the pole 200 and is perpendicular to the plane in which the top cover plate 130 is located.

In an example, the pole 200 may be approximately viewed as a cylindrical structure on the whole, and a rotation axis of the cylindrical structure is the axis 2011 of the pole 200. In another example, the pole 200 may be approximately viewed as a block structure. In this embodiment of this application, an axis of the pole 200 of the block structure is an axis running through the geometric center of the block structure and perpendicular to the plane in which the top cover plate 130 is located.

Specifically, the center of the first welding zone 201 is located on the axis 2011 of the pole 200, and the first welding zone 201 is symmetrical with respect to the axis 2011. Similarly, the center of the second welding zone 301 is also located on the axis 2011 of the pole 200, and the second welding zone 301 is also symmetrical with respect to the axis 2011.

In this technical solution, the first welding zone 201 and the second welding zone 301 are disposed symmetrically with respect to the axis 2011 of the pole 200 so that during welding of the pole 200 and the adapting piece 300, the symmetrically disposed welding zones can offset transverse pressure on both sides of the axis 2011 when a clamp is used to press-fit the first welding zone 201 and the second welding zone 301, thereby improving the relative stability between the first welding zone 201 and the second welding zone 301 so as to further improve the welding performance thereof.

In the embodiment shown in FIG. 4, how the pole 200 and the adapting piece 300 are welded is described by assuming that the plane in which the top cover plate 130 is located is the horizontal plane and that the axis 2011 of the pole 200 is parallel to the vertical direction. It can be understood that after the poles 200 and the adapting pieces 300 are welded, the top cover assembly 101 including the top cover plate 130, the poles 200 and the adapting pieces 300 is installed into the housing 120 accommodating the electrode assembly 110 and having the opening, so as to form the battery cell 100. After the top cover assembly 101 is installed on the battery cell 100, the first welding zone 201 of the pole 200 faces toward the inside of the battery cell 101, or faces the inside of the battery for brevity.

Optionally, to implement the first welding zone 201 of the pole 200 oblique with respect to the plane in which the top cover plate 130 is located, in a possible embodiment, the pole 200 includes a first protruding portion 210 that protrudes toward the inside of the battery and the first welding zone 201 is located in at least part of the first protruding portion 210, as shown in FIG. 4. Correspondingly, the adapting piece 300 includes a second recessed portion 310 that mates with the first protruding portion 210, and the second welding zone 301 is located in a zone of the second recessed portion 310 that corresponds to the first welding zone 201.

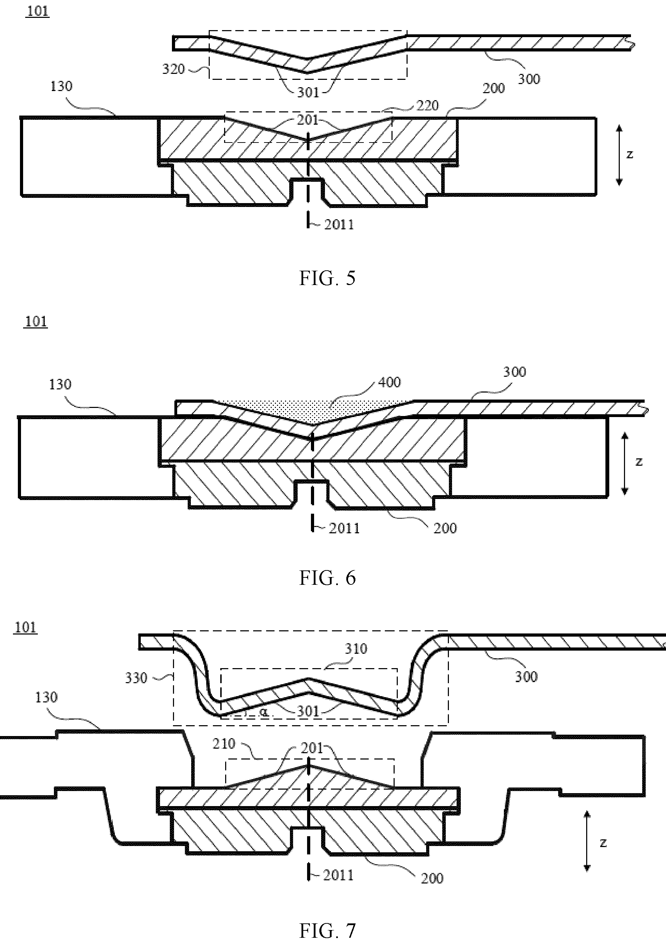

Alternatively, in another possible embodiment, the pole 200 includes a first recessed portion 220 that is recessed toward the outside of the battery and the first welding zone 201 is located in at least part of the first recessed portion 220, as shown in FIG. 5. Correspondingly, the adapting piece 300 includes a second protruding portion 320 that mates with the first recessed portion 220, and the second welding zone 301 is located in a zone of the second protruding portion 320 that corresponds to the first welding zone 201.

Optionally, in the embodiments shown in FIG. 4 and FIG. 5, the first protruding portion 210 or the first recessed portion 220 of the pole 200 may be symmetrical with respect to the axis 2011 of the pole 200. Therefore, the first welding zone 201 disposed in at least part of the first protruding portion 210 or the first recessed portion 220 may be symmetrical with respect to the axis 2011 of the pole 200. Correspondingly, the second recessed portion 310 or the second protruding portion 320 of the adapting piece 300 may also be symmetrical with respect to the axis 2011 of the pole 200. Therefore, the second welding zone 301 disposed in the second recessed portion 310 or the second protruding portion 320 may be symmetrical with respect to the axis 2011 of the pole 200.

In the embodiment shown in FIG. 4, all portions of the pole 200 have a small thickness in the z direction except for the first protruding portion 210, which helps reduce the overall manufacturing costs of the pole 200.

In the embodiment shown in FIG. 5, the pole 200 may have a large overall thickness in the z direction so that the pole 200 can be provided with the first recessed portion 220 that is recessed toward the outside of the battery. In this embodiment, the first recessed portion 220 of the pole 200 is recessed toward the outside of the battery so that the space inside the battery is not affected, thereby helping to improve the energy density of the battery.

During welding of the pole 200 and the adapting piece 300, spatterings are generated from the pole 200 and the adapting piece 300 and attached to the surface of the adapting piece 300 to such an extent that the spatterings cannot be easily removed. After the top cover assembly 101 is installed on the battery cell 100, the spatterings may enter the inside of the battery cell 100, affecting the overall performance of the battery cell 100 and even causing safety problems.

In view of this, to prevent the spatterings from entering the inside of the battery cell 100 and affecting the battery cell 100, after the pole 200 and the adapting piece 300 are welded, an adhesive layer is disposed on a side of the adapting piece 300 facing toward the inside of the battery cell 100, to fix the spatterings generated during welding.

FIG. 6 is a schematic structural diagram of the pole 200 and the adapting piece 300 in the embodiment shown in FIG. 5 after welding.

With reference to FIG. 5 and FIG. 6, corresponding to the first recessed portion 220 of the pole 200 recessed toward the outside of the battery, the second protruding portion 320 that protrudes toward the outside of the battery may be formed on the adapting piece 300. From a relative perspective, the second protruding portion 320 may also be regarded as a recessed portion that is recessed toward the inside of the battery. The adhesive layer 400 may be accommodated in the recessed portion to fix spatterings generated in welding the first welding zone 201 and the second welding zone 301, to prevent the spattering from affecting other components of the battery, thereby guaranteeing the electrical performance and safety performance of the battery.

Optionally, as shown in FIG. 6, the adhesive layer 400 can fill up the recessed portion of the adapting piece 300 that is recessed toward the inside of the battery, so as to fully ensure that the spatterings in the recessed portion are fixed by the adhesive layer 400, thereby improving reliability of the battery.

With reference to the embodiment shown in FIG. 4, to fit with the first protruding portion 210 of the pole 200 protruding toward the inside of the battery, the second recessed portion 310 that is recessed toward the inside of the battery may be formed on the adapting piece 310. From a relative perspective, the second recessed portion 310 may also be regarded as a protruding portion that protrudes toward the outside of the battery. This protruding portion cannot be used to accommodate the adhesive layer that fixes spatterings generated in welding the first welding zone 201 and the second welding zone 301.

In view of this, FIG. 7 is a schematic structural diagram of another top cover assembly 101 according to an embodiment of this application.

As shown in FIG. 7, in this embodiment of this application, the adapting piece 300 further includes a boss structure 330 symmetrical relative to the axis 2011 of the pole 200 and protruding toward the outside of the battery, where the boss structure 300 is a semi-closed hollow structure, and the second welding zone 301 is located on the boss structure 330.

Considering the boss structure 330, the top cover plate 130 and the pole 200 may be configured to form an accommodating zone. The boss structure 330 may be disposed in this accommodating zone. The second welding zone 301 of the boss structure 330 corresponds to the first welding zone 201 of the pole 200.

Optionally, the boss structure 330 includes, but is not limited to, a semi-closed hollow cylindrical structure having a bottom surface and a side surface. The second welding zone 301 may be located at the bottom surface of the hollow cylindrical structure. The hollow cylindrical structure can be well adapted to the pole 220 of a cylindrical structure, facilitating the fitting and installation of the adapting piece 300 on the pole 220. In addition, the boss structure 330 may be a semi-closed hollow cylindrical structure, a semi-closed hollow cuboid structure, or the like, which is not specifically limited in the embodiments of this application.

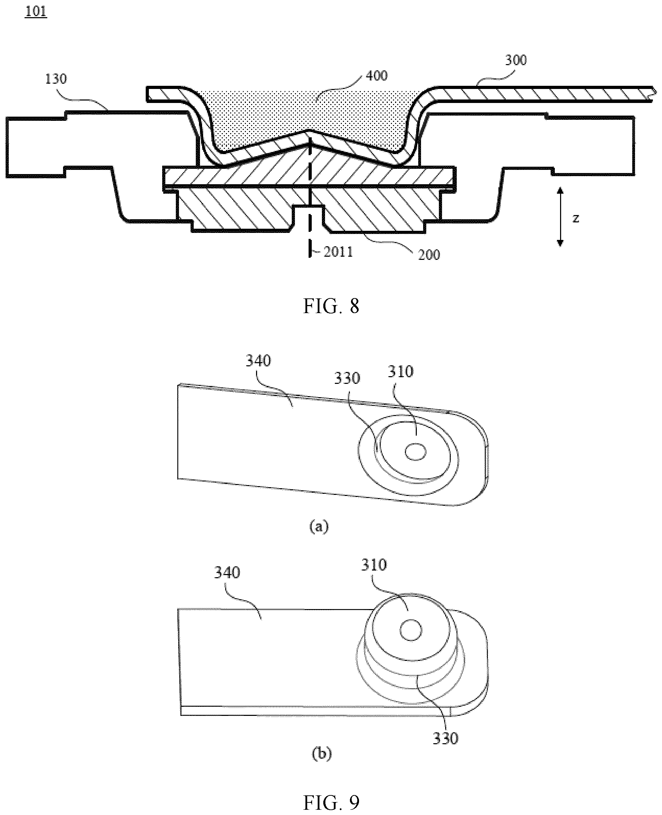

FIG. 8 is a schematic structural diagram of the pole 200 and the adapting piece 300 in the embodiment shown in FIG. 7 after welding.

With reference to FIG. 7 and FIG. 8, the boss structure 330 that protrudes toward the outside of the battery is formed at the adapting piece 300. From a relative perspective, the boss structure 330 may also be regarded as a recessed portion that is recessed toward the inside of the battery. The adhesive layer 400 may be accommodated in this recessed portion to fix spatterings generated in welding the first welding zone 201 of the pole 200 and the second welding zone 301 of the boss structure 330, to prevent the spattering from affecting other portions of the battery, thereby guaranteeing the electrical performance and safety performance of the battery.

Optionally, in the embodiments shown in FIG. 7 and FIG. 8, for how the second welding zone 301 is disposed in the boss structure 330, refer to the technical solution related to the second welding zone 301 in the embodiment shown in FIG. 4.

Specifically, as shown in FIG. 7, the bottom surface of the boss structure 330 may be provided with the second recessed portion 310, the second recessed portion 310 may be recessed toward the inside of the boss structure 330, and the second welding zone 301 is located at a local zone of the second recessed portion 310. Correspondingly, to fit with the second recessed portion 310 in which the second welding zone 301 is located, the first protruding portion 210 is disposed on the pole 200. The first welding zone 201 is located in a zone of the first protruding portion 210 that corresponds to the second welding zone 301.

If the pole 200 is not provided with the first protruding portion 210, the boss structure 330 is not provided with the second recessed portion 310, and both the first welding zone 201 of the pole 200 and the second welding zone 301 of the boss structure 330 are flat, the boss structure 330 has a large hollow space. To fully ensure that the spatterings attached to the boss structure 330 are fixed by the adhesive layer 400, the adhesive layer 400 accommodated in the boss structure 330 needs to be large enough to fill up the boss structure 330. According to the technical solution in this embodiment of this application, the second recessed portion 310 that is recessed toward the inside of the boss structure 330 is provided in the boss structure 330, so that the hollow space of the boss structure 330 becomes smaller and therefore needs to accommodate a smaller adhesive layer 400, thereby reducing the overall manufacturing costs of the battery while fully ensuring that the spatterings in the boss structure 330 are fixed by the adhesive layer 400.

Optionally, as shown in FIG. 7 and FIG. 8, height of the second recessed portion 310 is not greater than height of the boss structure 330 in a direction of the axis 2011 (z direction) of the pole 200. In this embodiment, the adhesive layer 400 may be disposed in the boss structure 330 to cover the side of the second recessed portion 310 that faces toward the inside of the battery, thereby ensuring the performance of the battery. In addition, the second recessed portion 310 is not disposed outside the boss structure 330 so that no additional space inside the battery is occupied, thereby improving the energy density of the battery.

On the basis that the adapting piece 300 includes the boss structure 330, in the embodiments shown in FIG. 7 and FIG. 8, the bottom surface of the boss structure 330 is provided with the second recessed portion 310, and the pole 200 is provided with the first protruding portion 210 mating with the second recessed portion 310. Optionally, the bottom surface of the boss structure 330 may alternatively be provided with the second protruding portion 320, the second protruding portion 320 protrudes toward the outside of the battery, and the pole 200 is provided with a first recessed portion 220 mating with the second protruding portion 320. Specifically, for a technical solution related to the second protruding portion 320 and the first recessed portion 220, refer to the related descriptions in the embodiment shown in FIG. 5. Details are not repeated herein again.

Optionally, in some embodiments, the second recessed portion 310 or the second protruding portion 320 of the adapting piece 300 is a hollow taper structure having a side surface. The hollow taper structure is symmetrical with respect to the axis 2011 of the pole 200, and the second welding zone 301 is located on at least part of the side surface of the hollow taper structure.

Alternatively, in some other embodiments, the second recessed portion 310 or the second protruding portion 320 of the adapting piece 300 may be a hollow frustum structure having a top surface and a side surface. The hollow frustum structure is symmetrical with respect to the axis 2011 of the pole 200, and the second welding zone 301 is located on at least part of the side surface of the hollow frustum structure.

Certainly, in other embodiments, the second recessed portion 310 or the second protruding portion 320 of the adapting piece 300 may alternatively be other hollow structures symmetrical with respect to the axis 2011 of the pole 200. This is not specifically limited in the embodiments of this application.

It can be understood that for example, in the embodiments shown in FIG. 4 to FIG. 8, the second recessed portion 310 or the second protruding portion 320 is a schematic cross-sectional view of the second recessed portion 310 or the second protruding portion 320 of a hollow taper structure.

In addition, it should be noted that in this application, the taper structure may be a cone structure or a pyramid structure, and similarly, the frustum structure may also be a truncated cone structure or a truncated pyramid structure.

FIG. 9 is a schematic diagram of three-dimensional structures of an adapting piece 300 viewed from two angles according to an embodiment of this application.

As shown in (a) and (b) of FIG. 9, the adapting piece 300 includes the boss structure 330 and the second recessed portion 310. The boss structure 330 is a hollow cylindrical structure having a bottom surface and a side surface. The second recessed portion 310 is a hollow truncated cone structure with a top surface and a side surface. The second recessed portion 310 is disposed at the bottom surface of the boss structure 330, that is, both the top surface and the side surface of the second recessed portion 310 are on the bottom surface of the boss structure 330. In other words, the bottom surface of the boss structure 330 may be recessed toward the inside of the battery to form the second recessed portion 310 of a hollow truncated cone structure.

In addition to the boss structure 330 and the second recessed portion 310, the adapting piece 300 further includes a plate portion 340. An opening of the boss structure 330 joins the plate portion 340, and the boss mechanism 330 protrudes toward the outside of the battery relative to the plate portion 340.

It can be understood that as examples instead of limitations, FIG. 9 is only a three-dimensional structural diagram of an adapting piece 300 according to an embodiment of this application. On the basis that the adapting piece 300 includes the boss structure 330 shown in FIG. 9, the bottom surface of the boss structure 330 may be recessed toward the inside of the battery to form the second recessed portion 310 of a hollow taper structure; or the bottom surface of the boss structure 330 may protrude toward the outside of the battery to form the second protruding portion 320 of a hollow frustum structure or a hollow taper structure.

In a case that the adapting piece 300 does not include the boss structure 330, in the embodiment shown in FIG. 4, the plate portion 340 may be recessed toward the inside of the battery to form the second recessed portion 310 of a hollow taper structure or a hollow frustum structure. Alternatively, in the embodiment shown in FIG. 5, the plate portion 340 may protrude toward the outside of the battery to form the second protruding portion 320 of a hollow frustum structure or a hollow frustum structure.

It can be understood that to fit with the second recessed portion 310 or the second protruding portion 320 of a hollow taper structure or hollow frustum structure of the adapting piece 300, the first protruding portion 210 of the pole 200 mating with the second recessed portion 210 or the first recessed portion 220 mating with the second protruding portion 320 is also a taper structure or a frustum structure correspondingly for easy fitting of the two portions.

According to the technical solution in this embodiment of this application, the second recessed portion 310 or the second protruding portion 320 of the adapting piece 300 is a hollow frustum structure or hollow taper structure that is easy to process and fits for mounting on the pole 200.

In addition, if the second recessed portion 310 or the second protruding portion 320 of the adapting piece 300 is a hollow truncated cone structure or a hollow cone structure, the side surface thereof is a smooth arc surface so that the second welding zone 301 on the side surface of the second recessed portion 310 or the second protruding portion 320 is a smooth welding zone without bulges, which can improve the welding performance of the pole 200 and the adapting piece 300.

Optionally, an axial section of the hollow frustum structure or the hollow taper structure may have a base angle of less than 20°.

Specifically, a section across an axis of the hollow frustum structure or hollow taper structure is an axial section. In other words, the axis of the hollow frustum structure or hollow taper structure is on its axial section. Still referring to FIG. 7, the schematic diagram of the second recessed portion 310 shown in FIG. 7 may be a schematic diagram of an axial section of the hollow taper structure. The axial section of the hollow taper structure may have a base angle α of less than 20° so as to control the side surface of the hollow taper structure to have a small slope.

If the side surface of the hollow frustum structure or the hollow taper structure has a large slope, the first welding zone 201 and the second welding zone 301 also have a large slope. In a case of using a laser welding process to weld the first welding zone 201 and the second welding zone 301, a laser generating apparatus moves in the horizontal direction at a specific step and emits laser light to the second welding zone 301 on the side surface of the hollow frustum structure or the hollow taper structure of the adapting piece 300. If the side surface of the hollow frustum structure or the hollow taper structure has a large slope, the laser light also moves a long distance on the side surface of the hollow frustum structure or the hollow taper structure. This is unfavorable for welding of the second welding zone 301 and the first welding zone 210, and affects the electrical connection performance of the pole 200 and the adapting piece 300.

In view of this, in the technical solution in this embodiment of this application, the base angle α of the axial section of the hollow frustum structure or the hollow taper structure is controlled to be less than 20° so that the side surface of the hollow frustum structure or the hollow taper structure has a small slope. This can improve the welding performance of the second welding zone 301 on the side surface and the first welding zone 210, thereby ensuring good electrical connection between the pole 200 and the adapting piece 300.

Optionally, on the basis of the foregoing embodiment of this application, the adapting piece 300 may further include a stress relief portion 350. The stress relief portion 350 is configured to relieve welding stress in the second welding zone 301 of the adapting piece 300.

Specifically, when the second welding zone 301 of the adapting piece 300 is welded to the first welding zone 201 of the pole 200, an amount of heat is generated at the two welding zones, causing the two welding zones to expand. After welding, the two welding zones cool down and contract. The sheet-like adapting piece 300 is relatively thin, and a welding contraction stress, also known as welding stress, is generated after the second welding zone 301 expands under heat and contracts in cooling. Therefore, cracks occur at the boundary of the second welding zone 301 and a non-welding zone, which affects the performance of the adapting piece 300 and causes a potential safety hazard to the battery.

Therefore, in the technical solution in this embodiment of this application, the adapting piece 300 includes the stress relief portion 350. The stress relief portion 350 can relieve welding stress generated after the second welding zone 301 of the adapting piece 300 expands under heat and contracts in cooling, so as to avoid cracks in the adapting piece 300 and guarantee the performance of the adapting piece 300 and the battery containing the adapting piece 300.

Optionally, the stress relief portion 350 may be symmetrical with respect to the axis 2011 of the pole 200, and the second welding zone 301 is disposed around the stress relief portion 350.

In this embodiment of this application, like the second welding zone 301, the stress relief portion 350 may be symmetrical with respect to the axis 2011 of the pole 200 so that the stress relief portion 350 corresponds to the second welding zone 301 to symmetrically relieve the welding stress in the second welding zone 301. In this way, the second welding zone 301 remains a symmetrical structure after welding, thereby improving the installation stability of the adapting piece 300 in the battery. In addition, the second welding zone 301 is disposed around the stress relief portion 350 to allow the stress relief portion 350 to relieve the welding stress in all directions of the second welding zone 301 to the maximum extent, so as to avoid cracks in the adapting piece 300.

Optionally, in some embodiments, the stress relief portion 350 may be disposed at the center of the second recessed portion 310 or the second protruding portion 320 in the foregoing embodiments of this application. Further, the second welding zone 301 located on the second recessed portion 310 or the second protruding portion 320 may be symmetrically disposed around the stress relief portion 350.

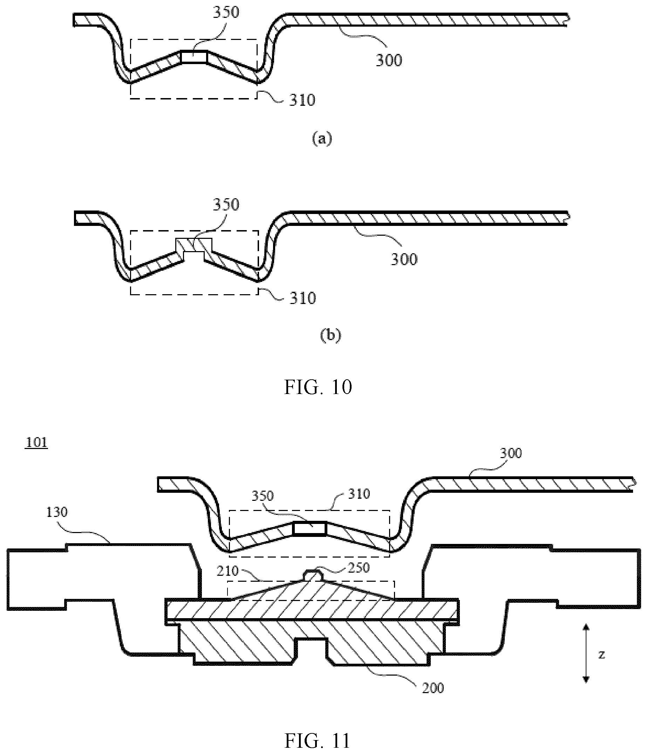

Based on this embodiment, FIG. 10 is a schematic structural diagram of two adapting pieces 300 according to an embodiment of this application.

As shown in FIG. 10, the stress relief portion 350 may be disposed at the center of the second recessed portion 310. Optionally, the second recessed portion 310 may be a hollow frustum structure, and the stress relief portion 350 is disposed at the center of a top surface of the hollow frustum structure.

In an example, as shown in (a) of FIG. 10, the stress relief portion 350 may be a hole. Optionally, the hole may be round, square or the like.

In a case that the second recessed portion 310 is a hollow frustum structure, the entire top surface of the hollow frustum structure can be provided as a hole to serve as the stress relief portion 350. In this case, the second recessed portion 310 may be a hollow frustum structure including only a side surface.

In this example, the stress relief portion 350 is a hole and therefore is easy to process with lower manufacturing costs, and the hole can adaptively adjust its size with the expansion and contraction of the second welding zone 301 during welding, to relieve the welding stress in the second welding zone 301.

Optionally, in this embodiment of this application, the size of the hole needs to be controlled within an appropriate range so as to guarantee the stress relief effect without affecting the area of the second welding zone 301 much. For example, in some embodiments, a ratio of the area of the hole to the area of the second welding zone 301 is not greater than 4% so as to guarantee the area and welding effect of the second welding zone 301.

In another example, as shown in (b) of FIG. 10, the stress relief portion 350 may alternatively be a protruding portion in the second recessed portion 310 that protrudes toward a direction leaving the pole 200. Optionally, the protruding portion may be groove-shaped, block-shaped, or the like.

In a case that the second recessed portion 310 is a hollow frustum structure, the top surface of the hollow frustum structure may protrude toward a direction leaving the pole 200 so as to form a protruding portion that serves as the stress relief portion 350.

In this example, the protruding portion can adaptively adjust its size with the expansion and contraction of the second welding zone 301 during welding, to relieve the welding stress in the second welding zone 301.

FIG. 11 is a schematic structural diagram of a top cover assembly 101 of a battery according to an embodiment of this application.

As shown in FIG. 11, on the basis that the adapting piece 300 includes the stress relief portion 350, optionally, the pole 200 may include a position limiting portion 250 configured to cooperate with the stress relief portion 350 to limit a position of the adapting piece 300.

In an example, the stress relief portion 350 is a hole, and the position limiting portion 250 may be a protruding structure that mates with the hole.

Alternatively, in other examples, the stress relief portion 350 may alternatively be a groove-shaped protruding portion shown in (b) of FIG. 10. In this case, the position limiting portion 250 can also be a protruding structure that mates with the groove-shaped protruding portion.

Certainly, the position limiting portion 250 may be a protruding structure, or may be a structure of other shapes, for example, a recessed portion, provided that it can adapt to the stress relief portion 350 to limit the position of the adapting piece 300. This embodiment of this application does not limit a specific form of the position limiting portion 250.

According to the technical solution in this embodiment of this application, the pole 200 is provided with the position limiting portion 250 so that when the adapting piece 300 is fitted to the pole 200, the position limiting portion 350 can limit the position of the adapting piece 300 to avoid relative movement of the adapting piece 300 on the pole 200, ensuring that the adapting piece 300 can be securely fitted on the pole 200. In addition, the stress relief portion 350 of the adapting piece 300 is also used to cooperate with the position limiting portion 250 of the pole 200. To be specific, the stress relief portion 350 is configured to not only relieve the welding stress in the second welding zone 301 of the adapting piece 300, but also cooperate with the position limiting portion 250 of the pole 200 to limit the position of the adapting piece 300. This simplifies the structural design of the adapting piece 300 and reduces the manufacturing costs of the adapting piece 300.

Optionally, the position limiting portion 250 may be disposed at the center of the first protruding portion 210 or the first recessed portion 220 in the foregoing embodiment of this application.

For example, as shown in FIG. 11, the pole 200 includes a first protruding portion 210, and the first protruding portion 210 may be a frustum structure. The position limiting portion 250 is disposed on a top surface of the frustum structure that faces toward the inside of the battery, and located at the center of the top surface. In this case, the adapting piece 300 includes a first recessed portion 310, and the first recessed portion 310 may be a hollow frustum structure corresponding to the first protruding portion 210. The stress relief portion 350 is disposed on a top surface of the hollow frustum structure that faces toward the inside of the battery, and located at the center of the top surface.

Correspondingly, in a case that the pole 200 includes the first recessed portion 220 of the hollow frustum structure, the position limiting portion 250 is disposed on a top surface of the frustum structure that faces toward the outside of the battery, and located at the center of the top surface. In this case, the adapting piece 300 includes a second protruding portion 320, and the second protruding portion 320 may be a hollow frustum structure corresponding to the first recessed portion 220. The stress relief portion 350 is disposed on a top surface of the hollow frustum structure that faces toward the outside of the battery, and located at the center of the top surface.

According to the technical solution in this embodiment of this application, the position limiting portion 250 is disposed at the center of the first protruding portion 210 or the first recessed portion 220, and can cooperate with the stress relief portion 350 disposed at the center of the second recessed portion 310 or the second protruding portion 320 to limit the position of the central part of the adapting piece 300, so as to ensure the position limiting effect and installation stability of the adapting piece 300.

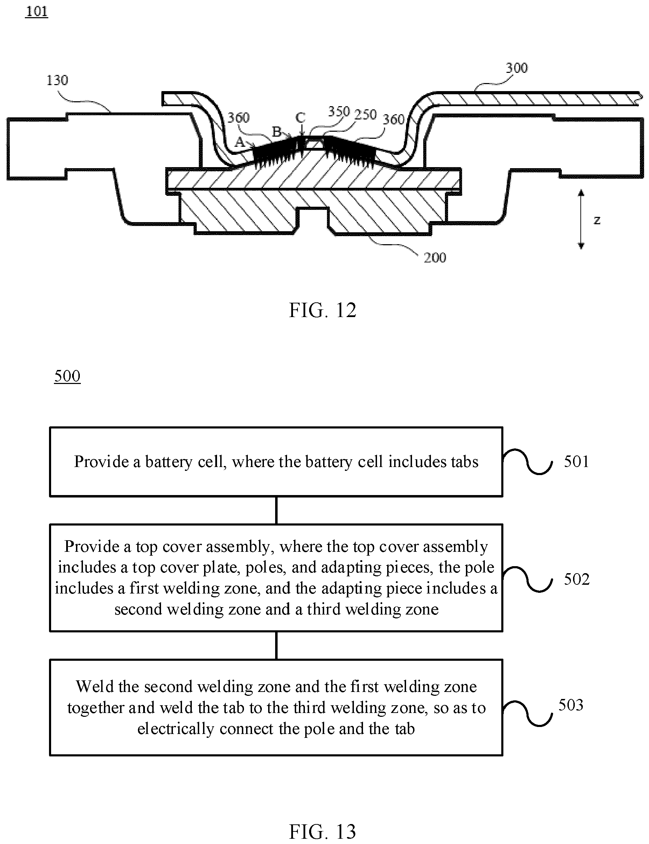

FIG. 12 is another schematic structural diagram of a top cover assembly 101 according to an embodiment of this application.

As shown in FIG. 12, if the adapting piece 300 and the pole 200 are welded through laser, the black zone is a laser irradiation zone 360 of the adapting piece 300 and the pole 200. It can be understood that the laser irradiation zone 360 in this embodiment of this application includes the first welding zone 201 of the pole 200 and the second welding zone 301 of the adapting piece 300.

Optionally, during welding, laser light emitted by a laser emitting apparatus to the adapting piece 300 may move from a first point A to a second point B shown in the figure, so as to weld the first welding zone 201 of the pole 200 and the second welding zone 301 of the adapting piece 300. As described above, during welding, the top cover plate 130 may be disposed on the horizontal plane, and both the first welding zone 201 of the pole 200 and the second welding zone 301 of the adapting piece 300 are disposed obliquely with respect to the horizontal plane. In the vertical direction, the second point B is located in an opposite direction of gravity of the first point A.

Therefore, in this embodiment of this application, during welding, when the laser emitting apparatus emits laser light to the second point B of the adapting piece 300 so as to melt a zone corresponding to the second point B through radiation, a liquid molten pool formed in the zone can flow in the direction of gravity to the first point A at which welding has been completed, so as to fill in cracks that may be formed at the first point A, thereby reducing the cracks formed at the first point A, and guaranteeing the performance of the adapting piece 300 and the battery using the adapting piece 300.

Optionally, in the embodiment shown in FIG. 12, the adapting piece 300 includes a stress relief portion 350 of a hole form, and the pole 200 includes a position limiting portion 250 of a protruding structure. In this case, the hole and the protruding structure (for example, a point C shown in the figure) may be welded through butt welding. In this embodiment, the stress relief portion 350 of the adapting piece 300 is provided as a hole, the position limiting portion 250 of the pole 200 is provided as a protruding structure, and the hole and the protruding structure are welded through butt welding, which helps check their welding status, so as to reduce poor welding and improve the welding performance of the adapting piece 300 and the pole 200.

An embodiment of this application further provides a battery. The battery may include a battery cell 100 and the top cover assembly 101 in the foregoing embodiments. The battery cell 101 includes tabs, where the tabs are electrically connected to poles 200 by using adapting pieces 300.

An embodiment of this application further provides an electric apparatus. The electric apparatus may include the battery in the foregoing embodiments, and the battery is configured to supply electric energy to the electric apparatus.

Optionally, the electric apparatus can be a vehicle 1, a ship, or a spacecraft.

The top cover assembly 101, the battery, and the electric apparatus in the embodiments of this application have been described above, and a battery preparation method and apparatus in the embodiments of this application are described below. For content that is not described in detail, refer to the foregoing embodiments.

FIG. 13 is a schematic flowchart of a battery preparation method 500 according to an embodiment of this application. As shown in FIG. 13, the method 500 may include the following steps.
501. Provide a battery cell 100, where the battery cell 100 includes tabs.
502. Provide a top cover assembly 101, where the top cover assembly 101 includes a top cover plate 130; poles 200 disposed on the top cover plate 130, each of which includes a first welding zone 201; and adapting pieces 300, each of which includes a second welding zone 301 and a third welding zone, where the second welding zone 301 corresponds to the first welding zone 201, both the first welding zone 201 and the second welding zone 301 are disposed obliquely with respect to a plane in which the top cover plate 130 is located, and the third welding zone corresponds to the tab.
503. Weld the second welding zone 301 and the first welding zone 201 together and weld the tab to the third welding zone, so as to electrically connect the pole 200 and the tab.

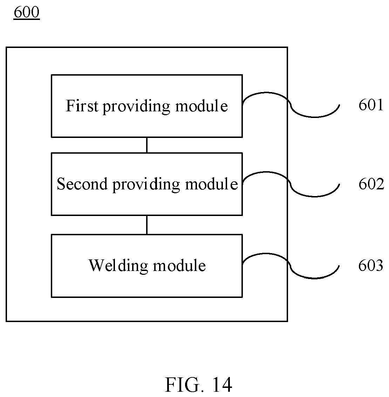

FIG. 14 is a schematic block diagram of a battery preparation apparatus 600 according to an embodiment of this application. As shown in FIG. 14, the battery preparation apparatus 600 may include a first providing module 601, a second providing module 602, and a welding module 603.

The first providing module 601 is configured to provide a battery cell 100 and provide the battery cell 100, where the battery cell 100 includes tabs.

The second providing module 602 is configured to provide a top cover assembly 101, where the top cover assembly 101 includes a top cover plate 130; poles 200 disposed on the top cover plate 130, each of which includes a first welding zone 201; and adapting pieces 300, each of which includes a second welding zone 301 and a third welding zone, where the second welding zone 301 corresponds to the first welding zone 201, both the first welding zone 201 and the second welding zone 301 are disposed obliquely with respect to a plane in which the top cover plate 130 is located, and the third welding zone corresponds to the tab.

The welding module 603 is configured to weld the second welding zone 301 and the first welding zone 201 together and weld the tab to the third welding zone, so as to electrically connect the pole 200 and the tab.

Although this application has been described with reference to the preferred embodiments, various modifications to this application and replacements with equivalents of the components herein can be made without departing from the scope of this application. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A top cover assembly (101) of a battery, **characterized by** comprising:
a top cover plate (130);
poles (200) disposed on the top cover plate (130), wherein the pole (200) comprises a first welding zone (201); and
adapting pieces (300) configured to be electrically connected to the poles (200), wherein the adapting piece (300) comprises a second welding zone (301), and the second welding zone (301) is configured to be correspondingly welded to the first welding zone (201) to implement electrical connection;
wherein both the first welding zone (201) and the second welding zone (301) are disposed obliquely with respect to a plane in which the top cover plate (130) is located.

2. The top cover assembly (101) according to claim 1, **characterized in that** the pole (200) is of an axisymmetric structure, and the first welding zone (201) and the second welding zone (301) are disposed symmetrically with respect to an axis of the pole (200).

3. The top cover assembly (101) according to claim 1 or 2, **characterized in that** the pole (200) comprises a first protruding portion (210) that protrudes toward the inside of the battery, and the first welding zone (201) is located in at least part of the first protruding portion (210); and
the adapting piece (300) comprises a second recessed portion (310) that mates with the first protruding portion (210), and the second welding zone (301) is located in a zone of the second recessed portion (310) that corresponds to the first welding zone (201).

4. The top cover assembly (101) according to claim 1 or 2, **characterized in that** the pole (200) comprises a first recessed portion (220) that is recessed toward the outside of the battery, and the first welding zone (201) is located in at least part of the first recessed portion (220); and
the adapting piece (300) comprises a second protruding portion (320) that mates with the first recessed portion (220), and the second welding zone (301) is located in a zone of the second protruding portion (320) that corresponds to the first welding zone (201).

5. The top cover assembly (101) according to claim 3 or 4, **characterized in that** the second recessed portion (310) or the second protruding portion (320) is a hollow frustum structure or a hollow taper structure, wherein the hollow frustum structure or the hollow taper structure is symmetrical with respect to the axis of the pole (200), and the second welding zone (301) is located in at least part of a side surface of the hollow frustum structure or the hollow taper structure.

6. The top cover assembly (101) according to claim 5, **characterized in that** an axial section of the hollow frustum structure or the hollow taper structure has a base angle of less than 20°.

7. The top cover assembly (101) according to any one of claims 1 to 6, **characterized in that** the adapting piece (300) further comprises a stress relief portion (350), wherein the stress relief portion (350) is configured to relieve a welding stress applied to the second welding zone (301).

8. The top cover assembly (101) according to claim 7, **characterized in that** the stress relief portion (350) is symmetrical with respect to the axis of the pole (200), and the second welding zone (301) is disposed around the stress relief portion (350).

9. The top cover assembly (101) according to claim 7 or 8, **characterized in that** the stress relief portion (350) is disposed at center of the second recessed portion (310) or the second protruding portion (320).

10. The top cover assembly (101) according to any one of claims 7 to 9, **characterized in that** the stress relief portion (350) is a hole.

11. The top cover assembly (101) according to claim 10, **characterized in that** a ratio of area of the hole to area of the second welding zone (301) is not greater than 4%.

12. The top cover assembly (101) according to any one of claims 7 to 11, **characterized in that** the pole (200) further comprises a position limiting portion (250) configured to cooperate with the stress relief portion (350) so as to limit a position of the adapting piece (300).

13. The top cover assembly (101) according to claim 12, **characterized in that** the stress relief portion (350) is a hole, and the position limiting portion (250) is a protruding structure that mates with the hole.

14. The top cover assembly (101) according to claim 12 or 13, **characterized in that** the position limiting portion (250) is disposed at center of the first recessed portion (220) or the first protruding portion (210).

15. The top cover assembly (101) according to any one of claims 1 to 14, **characterized in that** the adapting piece (300) further comprises a boss structure (330) symmetrical relative to the axis of the pole (200) and protruding toward the outside of the battery, wherein the boss structure (330) is a semi-closed hollow structure, and the second welding zone (301) is located on the boss structure (330).

16. The top cover assembly (101) according to claim 15, **characterized in that** the boss structure (330) has an adhesive layer (400) inside.

17. The top cover assembly (101) according to claim 15 or 16, **characterized in that** the boss structure (330) comprises a second recessed portion (310) recessed toward the inside of the boss structure (330), and the second welding zone (301) is located in the second recessed portion (310); and
height of the second recessed portion (310) is not greater than height of the boss structure (330) in a direction of the axis of the pole (200).

18. A battery, **characterized by** comprising a battery cell (100), and the top cover assembly (101) according to any one of claims 1 to 17, wherein the battery cell (100) comprises tabs, and the tabs are electrically connected to the poles (200) through the adapting pieces (300).

19. An electric apparatus, **characterized by** comprising the battery according to claim 18, wherein the battery is configured to supply electric energy.

20. A battery preparation method (500), **characterized by** comprising:
providing (501) a battery cell (100), wherein the battery cell (100) comprises tabs;
providing (502) a top cover assembly (101), wherein the top cover assembly (101) comprises:
a top cover plate (130);
poles (200) disposed on the top cover plate (130), each of which comprises a first welding zone (201); and
adapting pieces (300), each of which comprises a second welding zone (301) and a third welding zone, wherein the second welding zone (301) corresponds to the first welding zone (201), both the first welding zone (201) and the second welding zone (301) are disposed obliquely with respect to a plane in which the top cover plate (130) is located, and the third welding zone corresponds to the tab; and
welding (503) the second welding zone (301) and the first welding zone (201) together and welding the tab to the third welding zone, so as to electrically connect the pole (200) and the tab.

21. A battery preparation apparatus (600), **characterized by** comprising:
a first providing module (601), configured to provide a battery cell, wherein the battery cell comprises tabs;
a second providing module (602), configured to provide a top cover assembly (101), wherein the top cover assembly (101) comprises:
a top cover plate (130);
poles (200) disposed on the top cover plate (130), each of which comprises a first welding zone (201); and
adapting pieces (300), each of which comprises a second welding zone (301) and a third welding zone, wherein the second welding zone (301) corresponds to the first welding zone (201), both the first welding zone (201) and the second welding zone (301) are disposed obliquely with respect to a plane in which the top cover plate (130) is located, and the third welding zone corresponds to the tab; and
a welding module (603), configured to weld the second welding zone (301) and the first welding zone (201) together and weld the tab to the third welding zone, so as to electrically connect the pole (200) and the tab.
